(19) Europäisches Patentamt / European Patent Office / Office européen des brevets

(11) **EP 4 661 108 A1**

(12) **EUROPEAN PATENT APPLICATION**
published in accordance with Art. 153(4) EPC

(43) Date of publication:
**10.12.2025 Bulletin 2025/50**

(21) Application number: **24750082.0**

(22) Date of filing: **24.01.2024**

(51) International Patent Classification (IPC):
**H01M 4/525** (2010.01)   **C01G 53/00** (2025.01)
**H01M 4/505** (2010.01)

(52) Cooperative Patent Classification (CPC):
**C01G 53/00; H01M 4/505; H01M 4/525;**
**Y02E 60/10**

(86) International application number:
**PCT/JP2024/002019**

(87) International publication number:
**WO 2024/162132 (08.08.2024 Gazette 2024/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.01.2023 JP 2023013433**

(71) Applicant: **Panasonic Intellectual Property Management Co., Ltd.**
**Kadoma-shi, Osaka 571-0057 (JP)**

(72) Inventors:
• **ESAKI Shogo**
**Kadoma-shi, Osaka 571-0057 (JP)**
• **HIBINO Mitsuhiro**
**Kadoma-shi, Osaka 571-0057 (JP)**

(74) Representative: **Novagraaf International SA**
**Chemin de l'Echo 3**
**1213 Onex, Geneva (CH)**

(54) **POSITIVE ELECTRODE ACTIVE MATERIAL FOR NON-AQUEOUS ELECTROLYTE SECONDARY BATTERY, AND NON-AQUEOUS ELECTROLYTE SECONDARY BATTERY**

(57)   A positive electrode active material according to the present invention has a crystalline structure belonging to the space group R-3m, and is represented by the compositional formula $Li_{\alpha}Na_{\beta}Ni_{1-b-c}Mn_bX_cO_d$, wherein X is at least one element selected from the group consisting of representative elements and transition metal elements other than Li, Na, Ni, and Mn, $0.80 < \alpha \leq 1.20$, $0 < \beta \leq 0.20$, $0.80 < \alpha+\beta \leq 1.20$, $0 < 1-b-c \leq 1$, $0 \leq b < 1$, $0 \leq c < 1$, and d is a value that satisfies electrical neutrality. The ratio $I_{101}/I_{012}$ of the integrated intensity $I_{101}$ of a diffraction peak in the (101) plane to the integrated intensity $I_{012}$ of a diffraction peak in the (012) plane of an X-ray diffraction pattern obtained through powder X-ray diffraction of the positive electrode active material is less than 2.2.

Figure 2

EP 4 661 108 A1

**Description**

TECHNICAL FIELD

The present disclosure relates to a positive electrode active material for a non-aqueous electrolyte secondary battery and a non-aqueous electrolyte secondary battery using this positive electrode active material.

BACKGROUND ART

In non-aqueous electrolyte secondary batteries such as lithium-ion secondary batteries, many studies have been made on a positive electrode active material since the positive electrode active material has a significant influence on battery performance such as input/output characteristics, capacity, and durability. For the positive electrode active material, a lithium-transition metal composite oxide containing a transition metal element such as Ni or Mn is generally used. The type and added amounts of elements contained in the lithium-transition metal composite oxide, the crystal structure of the composite oxide, and the like significantly affect the battery performance, and even a slight change in these physical properties may fail to achieve the desired performance.

For example, Patent Literatures 1 to 3 disclose that the crystal structure of a positive electrode active material having a specific composition is improved for the purpose of improving battery performance such as an increase in the capacity. Specifically, it is disclosed that the battery performance such as charge-discharge capacity is improved when an integrated intensity ratio of a specific diffraction peak of a X-ray diffraction pattern of the positive electrode active material is controlled within a predetermined range.

CITATION LIST

PATENT LITERATURE

PATENT LITERATURE 1: Japanese Unexamined Patent Application Publication No. Hei 09-270260
PATENT LITERATURE 2: Japanese Unexamined Patent Application Publication No. 2000-133262
PATENT LITERATURE 3: Japanese Unexamined Patent Application Publication No. 2012-084552

SUMMARY

In recent years, non-aqueous electrolyte secondary batteries, such as lithium-ion secondary batteries, have been used as power sources for driving vehicles, and required to have even higher capacities. The positive electrode active materials of Patent Literatures 1 to 3 still have much room for improvement from the viewpoint of an increase in capacity.

A positive electrode active material for a non-aqueous electrolyte secondary battery according to the present disclosure is a positive electrode active material for a non-aqueous electrolyte secondary battery, having a crystal structure belonging to the space group R-3m, and being represented by a compositional formula $Li_\alpha Na_\beta Ni_{1-b-c} Mn_b X_c O_d$, wherein X represents at least one selected from the group consisting of transition metal elements and main-group elements other than Li, Na, Ni, and Mn; $0.80 < \alpha \leq 1.20$, $0 < \beta \leq 0.20$, $0.80 < \alpha + \beta \leq 1.20$, $0 < 1-b-c \leq 1$, $0 \leq b < 1$, and $0 \leq c < 1$ are satisfied; and d is a value satisfying electroneutrality, wherein a ratio $I_{101}/I_{012}$ of an integrated intensity $I_{101}$ of a diffraction peak of a (101) plane to an integrated intensity $I_{012}$ of a diffraction peak of a (012) plane of an X-ray diffraction pattern obtained by powder X-ray diffraction is less than 2.2.

A non-aqueous electrolyte secondary battery according to the present disclosure comprises: a positive electrode including the above positive electrode active material; a negative electrode; and a non-aqueous electrolyte.

According to the positive electrode active material of the present disclosure, increase in capacity of the non-aqueous electrolyte secondary battery can be achieved.

BRIEF DESCRIPTION OF DRAWING

FIG. 1 is a longitudinal sectional view of a non-aqueous electrolyte secondary battery of an example of an embodiment.
FIG. 2 is a view illustrating an X-ray diffraction pattern of a positive electrode active material produced in Examples and Comparative Examples.

## DESCRIPTION OF EMBODIMENTS

As a result of intensive studies aimed at increasing the capacity of a non-aqueous electrolyte secondary battery, the present inventors have found that the charge-discharge capacity of the battery is significantly increased by controlling the integrated intensity ratio $I_{101}/I_{012}$ of diffraction peaks of the (012) plane and the (101) plane of the X-ray diffraction pattern to be less than 2.2 in the positive electrode active material having a layered rock-salt structure represented by the above compositional formula. As will be described in detail later, the effect of improving the capacity is not obtained when the composition of the positive electrode active material is different from the above compositional formula, such as when the positive electrode active material does not contain Na, even if the integrated intensity ratio $I_{101}/I_{012}$ is less than 2.2, or when the positive electrode active material includes the composition represented by the above compositional formula but has an integrated intensity ratio $I_{101}/I_{012}$ of greater than or equal to 2.2.

It is assumed that the integrated intensity ratio $I_{101}/I_{012}$ of the X-ray diffraction peaks of the positive electrode active material having a layered rock-salt structure indicates oxygen deficiency in the crystal structure, disorder in which Ni enters the Li site, and the like. The intensity ratio tends to decrease as the calcining time during synthesis is increased. On the other hand, it has been found that simply decreasing the integrated intensity ratio $I_{101}/I_{012}$ leads to a decrease in the capacity. That is, only when the integrated intensity ratio $I_{101}/I_{012}$ is less than 2.2 in the lithium nickel composite oxide containing a predetermined amount of Na, the charge-discharge capacity is specifically improved. It is considered that a predetermined amount of Na stabilizes the crystal structure, and as a result, a significant increase in the capacity may be achieved.

Hereinafter, an example of embodiments of the positive electrode active material for a non-aqueous electrolyte secondary battery according to the present disclosure and the non-aqueous electrolyte secondary battery using this positive electrode active material will be described in detail with reference to the drawings. The scope of the present disclosure includes configurations composed of selective combinations of constitutional elements of a plurality of embodiments and modified examples described below.

In the embodiment described below, a non-aqueous electrolyte secondary battery 10 being a cylindrical battery in which a wound electrode assembly 14 is housed in a bottomed cylindrical exterior housing can 16 will be exemplified, but the exterior body of the battery is not limited to the cylindrical exterior housing can. Examples of other embodiments of the non-aqueous electrolyte secondary battery according to the present disclosure include: a rectangular battery comprising a rectangular exterior housing can; a coin battery comprising a coin-shaped exterior housing can; and a pouch battery comprising an exterior body constituted with laminated sheets including a metal layer and a resin layer. The electrode assembly is not limited to the wound electrode assembly, and may be a stacked electrode assembly in which a plurality of positive electrodes and a plurality of negative electrodes are alternately stacked via a separator.

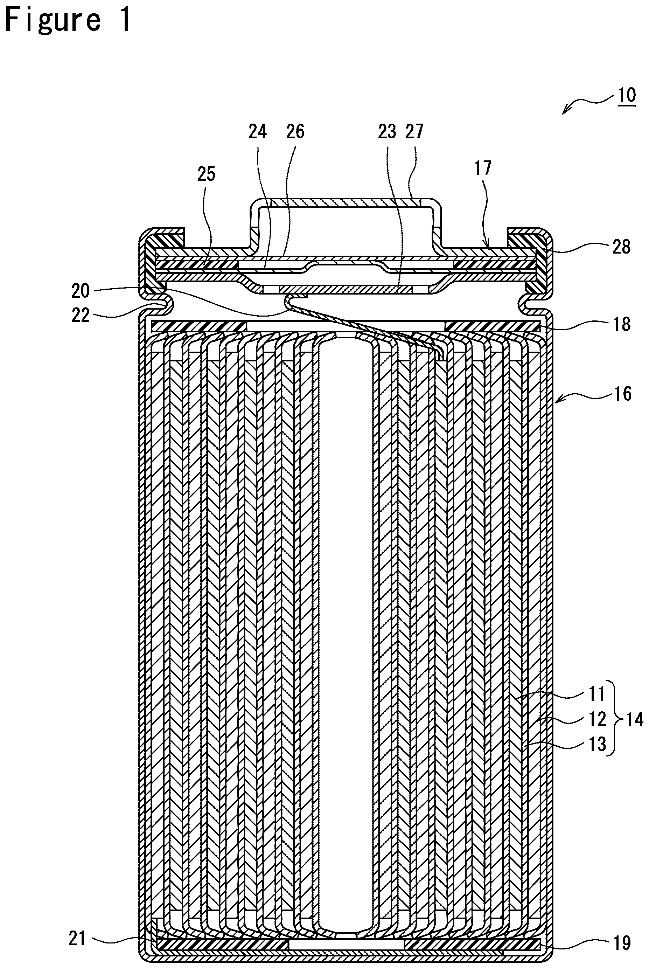

FIG. 1 is a sectional view of the non-aqueous electrolyte secondary battery 10 of an example of an embodiment. As illustrated in FIG. 1, the non-aqueous electrolyte secondary battery 10 comprises the wound electrode assembly 14, a non-aqueous electrolyte, and the exterior housing can 16 housing the electrode assembly 14 and the non-aqueous electrolyte. The non-aqueous electrolyte secondary battery 10 is, for example, a lithium-ion secondary battery. The electrode assembly 14 has a positive electrode 11, a negative electrode 12, and a separator 13, and has a wound structure in which the positive electrode 11 and the negative electrode 12 are spirally wound via the separator 13. The exterior housing can 16 is a bottomed cylindrical metallic container having an opening portion on one end side in an axial direction, and the opening portion of the exterior housing can 16 is sealed with a sealing assembly 17. Hereinafter, for convenience of description, the sealing assembly 17 side of the battery will be described as the upper side, and the bottom side of the exterior housing can 16 will be described as the lower side.

The non-aqueous electrolyte has lithium-ion conductivity. The non-aqueous electrolyte may be a liquid electrolyte (an electrolyte liquid) or may be a solid electrolyte.

The liquid electrolyte (the electrolyte liquid) includes a non-aqueous solvent and an electrolyte salt dissolved in the non-aqueous solvent. For the non-aqueous solvent, esters, ethers, nitriles, amides, and a mixed solvent of greater than or equal to two thereof, and the like are used, for example. An example of the non-aqueous solvent is ethylene carbonate (EC), ethyl methyl carbonate (EMC), dimethyl carbonate (DMC), diethyl carbonate (DEC), a mixed solvent thereof, or the like. The non-aqueous solvent may contain a halogen-substituted derivative in which hydrogen of these solvents is at least partially replaced with a halogen atom such as fluorine (for example, fluoroethylene carbonate or the like). For the electrolyte salt, a lithium salt such as $LiPF_6$ is used, for example. Note that the electrolyte is not limited to the liquid electrolyte, and may be a solid electrolyte using a gel polymer or the like.

As the solid electrolyte, a solid or gel polymer electrolyte, an inorganic solid electrolyte, and the like may be used, for example. For the inorganic solid electrolyte, a known material for an all-solid lithium-ion secondary battery or the like (for example, an oxide-type solid electrolyte, a sulfide-type solid electrolyte, a halogen-type solid electrolyte, and the like) may be used. The polymer electrolyte includes a lithium salt and a matrix polymer, or includes the non-aqueous solvent, the lithium salt, and a matrix polymer, for example. As the matrix polymer, a polymer material that absorbs the non-aqueous solvent to gel is used, for example. Examples of the polymer material include a fluororesin, an acrylic resin, and a polyether resin.

The positive electrode 11, the negative electrode 12, and the separator 13, which constitute the electrode assembly 14, are all a band-shaped elongated body, and spirally wound to be alternately stacked in a radial direction of the electrode assembly 14. To prevent precipitation of lithium, the negative electrode 12 is formed to be one size larger than the positive electrode 11. That is, the negative electrode 12 is formed to be longer than the positive electrode 11 in a longitudinal direction (longer direction) and a width direction (shorter direction). The separators 13 are formed to be one size larger than at least the positive electrode 11, and two of them are disposed so as to sandwich the positive electrode 11, for example. The electrode assembly 14 has a positive electrode lead 20 connected to the positive electrode 11 by welding or the like and a negative electrode lead 21 connected to the negative electrode 12 by welding or the like.

Insulating plates 18 and 19 are respectively disposed on the upper and lower sides of the electrode assembly 14. In the example illustrated in FIG. 1, the positive electrode lead 20 extends through a through hole of the insulating plate 18 toward the sealing assembly 17 side, and the negative electrode lead 21 extends through the outside of the insulating plate 19 toward the bottom of the exterior housing can 16. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, becomes a positive electrode terminal. The negative electrode lead 21 is connected to a bottom inner surface of the exterior housing can 16 by welding or the like, and the exterior housing can 16 becomes a negative electrode terminal.

A gasket 28 is provided between the exterior housing can 16 and the sealing assembly 17 to achieve sealability inside the battery. On the exterior housing can 16, a grooved portion 22 in which a part of a side wall thereof projects inward to support the sealing assembly 17 is formed. The grooved portion 22 is preferably formed in a circular shape along a circumferential direction of the exterior housing can 16, and supports the sealing assembly 17 with the upper face thereof. The sealing assembly 17 is fixed on the upper part of the exterior housing can 16 with the grooved portion 22 and with an end part of the opening portion of the exterior housing can 16 caulked to the sealing assembly 17.

The sealing assembly 17 has a stacked structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected at each of central parts thereof, and the insulating member 25 is interposed between the circumferential parts of the lower vent member 24 and the upper vent member 26. If the internal pressure of the battery increases due to abnormal heat generation, the lower vent member 24 is deformed so as to push the upper vent member 26 up toward the cap 27 side and breaks, and thereby a current pathway between the lower vent member 24 and the upper vent member 26 is cut off. If the internal pressure further increases, the upper vent member 26 breaks, and gas is discharged through an opening portion of the cap 27.

Hereinafter, the positive electrode 11, the negative electrode 12, and the separator 13, which constitute the electrode assembly 14, specifically the positive electrode 11, will be described in detail.

[Positive Electrode]

The positive electrode 11 has a positive electrode core and a positive electrode mixture layer disposed on the positive electrode core. For the positive electrode core, a foil of a metal stable within a potential range of the positive electrode 11, such as aluminum, an aluminum alloy, stainless steel, and titanium, a film in which such a metal is disposed on a surface layer thereof, and the like may be used. The positive electrode mixture layer includes a positive electrode active material, a conductive agent, and a binder, and is preferably provided on both surfaces of the positive electrode core. The positive electrode 11 may be produced by, for example, applying a positive electrode mixture slurry including the positive electrode active material, the conductive agent, and the binder on the positive electrode core, and drying and subsequently compressing the coating film to form the positive electrode mixture layer on both the surfaces of the positive electrode core.

Examples of the conductive agent included in the positive electrode mixture layer may include carbon black such as acetylene black and Ketjenblack, graphite, carbon nanotube (CNT), carbon nanofiber, graphene, metal fiber, metal powder, and conductive whisker. The conductive agents may be used singly, or in combination thereof. A content rate of the conductive agent is not particularly limited, but is greater than or equal to 0.1 mass% and less than or equal to 5 mass% relative to a mass of the positive electrode mixture layer, for example.

Examples of the binder included in the positive electrode mixture layer include fluorine-containing resins such as polytetrafluoroethylene (PTFE) and polyvinylidene fluoride (PVDF), olefin resins such as polyethylene, polypropylene, ethylene-propylene-isoprene copolymer, and ethylene-propylene-butadiene copolymer, polyacrylonitrile (PAN), a polyimide, a polyamide, and acrylic resins such as ethylene-acrylic acid copolymer. These resins may be used in combination with carboxymethylcellulose (CMC) or a salt thereof, polyethylene oxide (PEO), or the like. The binders may be used singly, or in combination thereof. A content rate of the binder is not particularly limited, but is greater than or equal to 0.1 mass% and less than or equal to 5 mass% relative to the mass of the positive electrode mixture layer, for example.

The positive electrode active material is a lithium sodium-transition metal composite oxide having a crystal structure belonging to the space group R-3m, the lithium sodium-transition metal composite oxide represented by the compositional formula $Li_\alpha Na_\beta Ni_{1-b-c} Mn_b X_c O_d$. In the compositional formula, X represents at least one selected from the group consisting of transition metal elements and main-group elements other than Li, Na, Ni, and Mn, $0.80 < \alpha \leq 1.20$, $0 < \beta \leq 0.20$, $0.80 < \alpha + \beta \leq 1.20$, $0 < 1-b-c \leq 1$, $0 \leq b < 1$, and $0 \leq c < 1$ are satisfied, and d is a value satisfying electroneutrality. The composite oxide constituting the positive electrode active material contains Li, Na, and Ni as essential elements and preferably further contains Mn. The contents of Li, Na, Ni, Mn, and X contained in the positive electrode active material can be measured using an ICP optical emission spectrometer (for example, CIROS-120, manufactured by SPECTRO).

The positive electrode active material has a layered rock-salt structure belonging to the space group R-3m and a composition represented by the above compositional formula, in which a ratio $I_{101}/I_{012}$ of an integrated intensity $I_{101}$ of a diffraction peak of a (101) plane to an integrated intensity $I_{012}$ of a diffraction peak of a (012) plane of an X-ray diffraction pattern obtained by powder X-ray diffraction of the positive electrode active material is less than 2.2. The charge-discharge capacity may be significantly improved by controlling the integrated intensity ratio $I_{101}/I_{012}$ of the diffraction peaks to be less than 2.2.

In the compositional formula $Li_\alpha Na_\beta Ni_{1-b-c} Mn_b X_c O_d$, the mole ratio ($\beta$) of Na may be greater than 0 and less than or equal to 0.20 ($0 < \beta \leq 0.20$), and is preferably less than or equal to 0.15, more preferably less than or equal to 0.05, and even more preferably 0.02. It is considered that, when the mole ratio ($\beta$) of Na is $0 < \beta \leq 0.15$, $0 < \beta \leq 0.05$, or $0 < \beta \leq 0.02$, the layered structure of the composite oxide is stable, and the effect of improving the charge-discharge capacity becomes more remarkable. When the mole ratio ($\beta$) of Na exceeds 0.20, Na ions may be extracted from the positive electrode during charge, and the extracted Na ions may be occluded in the negative electrode. As a result, a reaction with the non-aqueous electrolyte may occur during charge and discharge to generate a byproduct, resulting in a decrease in charge-discharge capacity and charge-discharge efficiency of the battery.

If a very small amount of Na is contained in the positive electrode active material, the layered structure is stabilized, which contributes to an increase in the capacity of the battery, and the mole ratio ($\beta$) of Na is preferably greater than or equal to 0.001, more preferably greater than or equal to 0.002, and even more preferably greater than or equal to 0.003. An example of a preferable range of the mole ratio ($\beta$) of Na satisfies $0.001 \leq \beta \leq 0.15$, $0.002 \leq \beta \leq 0.05$, or $0.003 \leq \beta \leq 0.02$.

In the compositional formula $Li_\alpha Na_\beta Ni_{1-b-c} Mn_b X_c O_d$, a total mole ratio ($\alpha + \beta$) of Li and Na may be greater than 0.80 and less than or equal to 1.20 ($0.80 < \alpha + \beta \leq 1.20$), and is preferably less than or equal to 1.05, more preferably less than or equal to 1.00, and may be less than or equal to 0.96. In addition, the total mole ratio ($\alpha + \beta$) of Li and Na is preferably greater than or equal to 0.90, more preferably greater than or equal to 0.91, and particularly preferably greater than or equal to 0.92. An example of a preferable range of the total mole ratio ($\alpha + \beta$) of Li and Na satisfies $0.90 \leq \alpha + \beta \leq 1.05$, $0.91 \leq \alpha + \beta \leq 1.00$, or $0.92 \leq \alpha + \beta \leq 0.96$. In this case, the effect of improving the charge-discharge capacity becomes more remarkable.

In the compositional formula $Li_\alpha Na_\beta Ni_{1-b-c} Mn_b X_c O_d$, the mole ratio (1-b-c) of Ni may be greater than or equal to 1 ($0 < 1-b-c \leq 1$), and is preferably less than or equal to 0.85, and more preferably less than or equal to 0.75. In addition, the mole ratio (1-b-c) of Ni is preferably greater than or equal to 0.30, and more preferably greater than or equal to 0.40. An example of a preferable range of the mole ratio (1-b-c) of Ni satisfies $0.35 \leq 1-b-c \leq 0.85$, or $0.40 \leq 1-b-c \leq 0.75$. In this case, the effect of improving the charge-discharge capacity becomes more remarkable.

The positive electrode active material preferably contains Mn as described above. In the compositional formula $Li_\alpha Na_\beta Ni_{1-b-c} Mn_b X_c O_d$, the mole ratio (b) of Mn is preferably less than or equal to 0.75, and more preferably less than or equal to 0.65. In addition, the mole ratio (b) of Mn is preferably greater than or equal to 0.20, and more preferably greater than or equal to 0.25. An example of a preferable range of the mole ratio (b) of Mn satisfies $0.25 \leq b \leq 0.65$. In this case, the effect of improving the charge-discharge capacity becomes more remarkable.

In the compositional formula $Li_\alpha Na_\beta Ni_{1-b-c} Mn_b X_c O_d$, the mole ratio (d) of O is a value satisfying electroneutrality. The mole ratio (d) of O is, i.e., a value satisfying the valence of O in the positive electrode active material. The mole ratio (d) of O is not particularly limited as long as the valence in the positive electrode active material is satisfied, and may be, for example, $d = \alpha + \beta + 1$, $d < \alpha + \beta + 1$, or $d > \alpha + \beta + 1$. In particular, in the case of $d < \alpha + \beta + 1$, the positive electrode active material immediately after being manufactured has a structure in which oxygen in the layered rock-salt structure is deficient.

In the compositional formula $Li_\alpha Na_\beta Ni_{1-b-c} Mn_b X_c O_d$, X may represent at least one element selected from the group consisting of Mg, Ca, Sr, Ba, Sn, Ti, Si, V, Cr, Fe, Cu, Zn, Bi, Sb, B, Ga, In, P, Zr, Hf, Nb, Ta, Mo, W, Co, and Al. When X is added in a small amount, the effect of improving the charge-discharge capacity becomes more remarkable. The mole ratio (c) of X is preferably less than or equal to 0.05 ($0 \leq c \leq 0.05$), and more preferably less than or equal to 0.03 ($0 \leq c \leq 0.03$).

In the compositional formula $Li_\alpha Na_\beta Ni_{1-b-c} Mn_b X_c O_d$, X preferably represents at least one selected from the group consisting of Al, Co, and Zr. Among these, Al or Co is preferable. For example, when Al is contained in the positive electrode active material, an example of a preferable range of the mole ratio (c) of Al satisfies $0.005 \leq c \leq 0.025$.

The positive electrode active material contains, as a main component, a composite oxide (hereinafter referred to as a "Li-Na composite oxide") having a composition represented by the above compositional formula, in which the integrated intensity ratio $I_{101}/I_{012}$ of X-ray diffraction peaks is less than 2.2. Here the main component means a component having the highest mass ratio among constituent components of the positive electrode active material. In a mixture layer of the positive electrode 11, a composite oxide other than the Li-Na composite oxide may be used in combination as the positive electrode active material, and the content of the Li-Na composite oxide is preferably greater than or equal to 50 mass%, and may be substantially 100 mass%.

The Li-Na composite oxide is formed of, for example, secondary particles each formed by aggregation of a plurality of primary particles. The Li-Na composite oxide has a volume-based median diameter (D50) of greater than or equal to 1 $\mu$m and less than or equal to 30 $\mu$m, or greater than or equal to 3 $\mu$m and less than or equal to 20 $\mu$m, for example. The D50 of the composite oxide is a particle diameter at which the volume integrated value is 50% in particle size distribution measured by a laser diffraction scattering method. A BET specific surface area of the Li-Na composite oxide is, for example, greater than or equal to 0.1 m$^2$/g and less than or equal to 10 m$^2$/g, or greater than or equal to 0.5 m$^2$/g and less than or equal to 5 m$^2$/g. The BET specific surface area of the composite oxide is measured according to a BET method (nitrogen adsorption method) described in JIS R1626. When the D50 and the BET specific surface area are within the range, the capacity can be easily increased.

In the Li-Na composite oxide, as described above, the ratio $I_{101}/I_{012}$ of the integrated intensity $I_{101}$ of the diffraction peak of the (101) plane to the integrated intensity $I_{012}$ of the diffraction peak of the (012) plane of the X-ray diffraction pattern obtained by powder X-ray diffraction is less than 2.2.

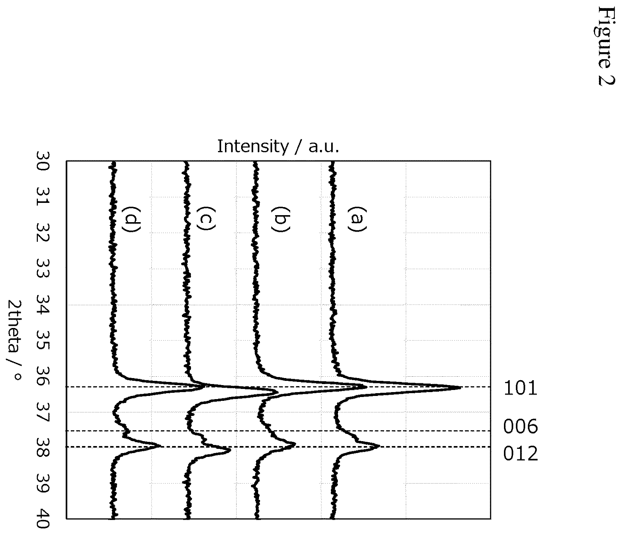

FIG. 2 shows an X-ray diffraction pattern of the Li-Na composite oxide of the present embodiment. (a) illustrates an X-ray diffraction pattern of the Li-Na composite oxide synthesized in Example 1 described later, and (b) illustrates an X-ray diffraction pattern of the Li-Na composite oxide synthesized in Example 2. (c) illustrates an X-ray diffraction pattern of the composite oxide synthesized in Comparative Example 1. (d) illustrates an X-ray diffraction pattern of the composite oxide synthesized in Comparative Example 10. The diffraction peak of the (101) plane appears within a 2θ range of greater than or equal to 36.2° and less than or equal to 36.5°, and the diffraction peak of the (012) plane appears within a 2θ range of greater than or equal to 37.8° and less than or equal to 38.1°.

As shown in FIG. 2, each of the X-ray diffraction patterns exhibits a diffraction peak of the (101) plane appearing within a 2θ range of greater than or equal to 36.2° and less than or equal to 36.5° and a diffraction peak of the (012) plane appearing within a 2θ range of greater than or equal to 37.8° and less than or equal to 38.1°. On the other hand, the X-ray diffraction patterns of the composite oxides of Comparative Examples 1 and 10 each have a peak top within a 2θ range of greater than or equal to 37.5° and less than or equal to 37.7°, while in the Li-Na composite oxides of Examples, peaks within a 2θ range of greater than or equal to 37.5° and less than or equal to 37.7° are weakened and buried in or integrated with the diffraction peak of the (012) plane, and the diffraction peak of the

(012) plane is shifted to the lower angle side. Here, a peak appearing at 2θ = 37.7° is a diffraction peak of a (006) plane, and when the integrated intensity of the (012) plane is calculated, an integrated intensity attributable to the (006) plane buried in or integrated with the peak is excluded. It is considered that, when the diffraction peak of the (006) plane clearly appears, the introduction of oxygen deficiency is insufficient. Therefore, the integrated intensity ratio $I_{101}/I_{012}$ of the diffraction peaks in the Li-Na composite oxides of Examples is smaller than that in the composite oxides of Comparative Examples.

It is assumed that in the X-ray diffraction pattern of the Li-Na composite oxide of the present embodiment, the diffraction peaks of the (101) plane and the (012) plane indicate oxygen deficiency in the layered rock-salt structure, disorder in which Ni enters the Li site, and the like. For example, it is considered that the integrated intensity ratio $I_{101}/I_{012}$ of the diffraction peaks decreases as the oxygen deficiency in the crystal structure increases, but the details are not clear. However, it has been confirmed that the charge-discharge capacity is specifically improved if the integrated intensity ratio $I_{101}/I_{012}$ of diffraction peaks is controlled to less than 2.2 in the composition represented by the above compositional formula.

The integrated intensity ratio $I_{101}/I_{012}$ of diffraction peaks in the Li-Na composite oxide may be less than 2.2, and is preferably greater than or equal to 1.5, more preferably greater than or equal to 1.7, and particularly preferably greater than or equal to 1.8. An example of a preferable range of the integrated intensity ratio $I_{101}/I_{012}$ is greater than or equal to 1.8 and less than 2.2 ($1.8 \leq I_{101}/I_{012} < 2.2$). Note that in a conventional general synthesis method of a positive electrode active material, it is difficult to control the integrated intensity ratio $I_{101}/I_{012}$ to be less than 2.2.

When the integrated intensity ratio $I_{101}/I_{012}$ of the diffraction peaks is greater than or equal to 2.2, for example, the introduction of oxygen deficiency is considered to be insufficient, and the capacity does not increase. Although the introduction of oxygen deficiency in the crystal structure may improve the electronic conductivity of the composite oxide, the crystal structure becomes unstable. It is considered that a predetermined amount of Na suppresses destabilization of the structure. If the integrated intensity ratio $I_{101}/I_{012}$ becomes too small, the crystal structure tends to be unstable even in the presence of Na, and thus the integrated intensity ratio $I_{101}/I_{012}$ is preferably controlled to be greater than or equal to 1.5.

The X-ray diffraction pattern of the Li-Na composite oxide is herein obtained using a desktop X-ray diffraction apparatus (manufactured by Rigaku Corporation, product name "MiniFlex600"). The diffracted X-ray is detected with a high-speed one dimensional detector (D/teX Ultra2).

The measurement conditions with the X-ray diffraction apparatus are as follows.

X-Ray Source: CuKα ray
Tube Voltage: 40 kV
Tube Current: 15 mA
Divergence Slit (DS): 0.625°
Scattering Slit (SS): 13 mm (open)
Receiving Slit (RS): 8 mm
Scanning Axis: 2θ/θ
Scanning Method: Continuous mode
2θ Scanning Range: 10-80°
Scanning Rate: 10°/min
Step Size: 0.02°

In the data obtained by the above X-ray diffraction measurement, a scanning angle 2θ is defined as x, and fitting is performed based on a pseudo-Voigt function, an equation (3) consisting of a linear sum of a Lorentz function represented by equation (1) and a Gaussian function represented by equation (2). Fitting yields a peak height h, a peak position u, a standard deviation w, a component η of the Lorentz function, and a component (1-η) of the Gaussian function. A product of the peak height h and the standard deviation w obtained by fitting is defined as the integrated intensity to calculate an integrated intensity at each reflection index.

[Expression 1]

$$f(x) = \frac{h}{1 + \frac{(x-u)^2}{w^2}} \qquad \text{Equation (1)}$$

[Expression 2]

$$g(x) = h\exp\left[-\frac{(x-u)^2}{2w^2}\right] \qquad \text{Equation (2)}$$

[Expression 3]

$$h(x) = \eta f(x) + (1-\eta)g(x) \qquad \text{Equation (3)}$$

The fitting based on the pseudo-Voigt function may be implemented, for example, by using a computer (for example, a personal computer) equipped with a CPU, a ROM, a RAM, an HDD, and various interfaces. Then, for example, a solver function of Excel developed by Microsoft and a nonlinear fit function of Origin developed by Lightstone is installed in this computer to perform the processing described above, or dedicated software for performing analysis (for example, X-ray analysis integrated software SmartLab Studio II manufactured by Rigaku Corporation, "RIETAN-FP" program (F. Izumi and K. Momma, Solid State Phenom., 130,15-20 (2007)) is installed to execute this software to perform the processing described above.

A Li-Na composite oxide is produced through (1) a step of mixing and calcinating a sodium raw material and a nickel raw material to synthesize a sodium composite oxide and (2) a step of reacting the sodium composite oxide with a lithium compound to replace a part of Na in the sodium composite oxide with Li. In step (1), a manganese raw material is preferably further added, and a raw material containing an element X may be added. In the synthesis step of the Li-Na composite oxide, synthesis conditions are controlled so that the integrated intensity ratio $I_{101}/I_{012}$ of the X-ray diffraction peaks is less than 2.2, and in step (2), the synthesis conditions are controlled so that a predetermined amount of Na remains. In controlling the integrated intensity ratio $I_{101}/I_{012}$, for example, calcining conditions in the step (1) are important. Note that the control may be performed under replacing conditions in step (2).

At least one selected from the group consisting of metallic sodium and a sodium compound is used as the sodium raw material. The sodium compound is not particularly limited as long as it contains Na, and examples thereof include an acetate such as $CH_3COONa$ and $CH_3COONa \cdot 3H_2O$, a nitrate such as $NaNO_3$, a sulfate such as $Na_2SO_4$, a carbonate such as $Na_2CO_3$, a bicarbonate such as $NaHCO_3$, a hydroxide such as $NaOH$, and an oxide such as $Na_2O$ and $Na_2O_2$. Among these, $Na_2CO_3$, $NaHCO_3$, $NaOH$, and $NaNO_3$ are preferable.

At least one selected from the group consisting of metallic nickel and a nickel compound is used as the nickel raw material. The nickel compound is not particularly limited as long as it contains Ni, and examples thereof include an oxide such as $NiO$, a hydroxide such as $NiOH$, $Ni(OH)_2$, and $NiOOH$, a nitrate such as $NiNO_3$, a carbonate such $NiCO_3$, and $Ni_4CO_3(OH)_6(H_2O)_4$, and a sulfate such as $NiSO_4$. Among these, $Ni(OH)_2$ is preferable.

At least one selected from the group consisting of metallic manganese and a manganese compound is used as the manganese raw material. The manganese compound is not particularly limited as long as it contains Mn, and examples thereof include an oxide such as $MnO$, $Mn_2O_3$, $Mn_3O_4$, and $MnO_2$, a hydroxide such as $Mn(OH)_2$ and $MnOOH$, a carbonate such as $MnCO_3$, a nitrate such as $Mn(NO_3)_2$, and a sulfate such as $MnSO_4$. Among these, $Mn(OH)_2$ is preferable.

At least one selected from the group consisting of an element X and a compound of the element X is used as the raw material containing the element X. The compound containing element X is not particularly limited as long as it contains X, and examples thereof include an oxide, a hydroxide, a carbonate, a nitrate, and a sulfate. Note that a compound containing Ni or Mn, a compound containing Ni or X, a compound containing Mn or X, or a compound containing Ni, Mn, and X may be used as raw materials for the sodium composite oxide.

The mixing ratio of the raw materials for the sodium composite oxide may be appropriately set without any particular limitation, but for example, in a mixture obtained by mixing the raw materials for the sodium composite oxide, the mixing ratio is preferably set so that $0.95 \leq a \leq 1.05$, $0.25 < b \leq 0.65$, $0 \leq c \leq 0.05$, and $0.4 \leq 1-b-c < 0.75$ are satisfied, where the mole ratio of Na is defined as a, the mole ratio of Ni is defined as 1-b-c, the mole ratio of Mn is defined as b, and the mole ratio of element X is defined as c. A method of mixing the raw materials is not particularly limited as long as the raw materials are uniformly mixed, for example, mixing using a known mixing machine such as a mixer can be used to mix.

The mixture of the raw materials is calcined in the atmosphere or in an oxygen stream using a calcining furnace. The calcining temperature is preferably greater than or equal to 700°C and less than or equal to 900°C, and more preferably greater than or equal to 750°C and less than or equal to 850°C. The temperature rising rate is preferably slow, for example, greater than or equal to 0.3°C/min and less than or equal to 5.0°C/min, or greater than or equal to 0.5°C/min and less than or equal to 3.0°C/min. The calcining time is preferably greater than or equal to 20 hours when the calcining temperature is greater than or equal to 750°C and less than or equal to 850°C. Herein, the calcining time means the time from when the temperature of the calcining furnace reaches the calcining temperature above until the calcination is completed and cooling starts. The calcined product is rapidly cooled in the atmosphere by being removed from the calcining furnace.

The integrated intensity ratio $I_{101}/I_{012}$ of the diffraction peaks of the Li-Na composite oxide finally obtained may be controlled to be less than 2.2 by increasing the calcining time in step (1). The integrated intensity ratio $I_{101}/I_{012}$ is preferably greater than or equal to 1.8 and less than 2.2 as described above, but when the integrated intensity ratio $I_{101}/I_{012}$ is controlled within this range, the calcining time is preferably greater than or equal to 10 hours and less than or equal to 50 hours, or greater than or equal to 20 hours and less than or equal to 30 hours, at a calcining temperature of greater than or equal to 750°C and less than or equal to 850°C. The sodium composite oxide is obtained, for example, by rapidly cooling the calcined product in the atmosphere, followed by pulverization by a known method.

In step (2), a part of Na in the sodium composite oxide is replaced with Li. That is, it is necessary to perform Li replacement so that a predetermined amount of Na remains. A preferable method of replacing Na with Li includes a method including adding a molten salt bed of a lithium salt to a sodium composite oxide and heating the mixture. For example, at least one selected from the group consisting of lithium nitrate, lithium sulfate, lithium chloride, lithium carbonate, lithium hydroxide, lithium iodide, and lithium bromide is used as the lithium salt.

The heating temperature in the Li replacing step is preferably greater than or equal to 200°C and less than or equal to 400°C, and more preferably greater than or equal to 250°C and less than or equal to 350°C. When the heating temperature exceeds 400°C, the reaction may proceed rapidly, causing a non-uniform reaction. On the other hand, when the heating temperature falls below 200°C, the reaction does not sufficiently proceed, and Na tends to remain in excess. The heat treatment time is set to, for example, greater than or equal to 3 hours and less than or equal to 10 hours after the temperature is increased at a temperature rising rate of greater than or equal to 3.0°C/min and less than or equal to 8.0°C/min to reach the desired heat treatment temperature. Cooling is performed after the heat treatment. Note that a cooling method is not particularly limited, and is, for example, natural cooling (in-furnace cooling). After cooling, the resulting product is thoroughly washed with water, ethanol, methanol, or the like, and dried to obtain a Li-Na composite oxide. The drying after washing is carried out in an atmosphere or vacuum, and is not particularly limited. After washing, heat treatment or washing treatment may be carried out again.

[Negative Electrode]

The negative electrode 12 has a negative electrode core and a negative electrode mixture layer disposed on the negative electrode core. For the negative electrode core, a foil of a metal stable within a potential range of the negative electrode 12, such as copper, a copper alloy, stainless steel, nickel, and a nickel alloy, a film in which such a metal is disposed on a surface thereof, and the like may be used. The negative electrode mixture layer includes a negative electrode active material and a binder, and is preferably provided on both surfaces of the negative electrode core. The negative electrode 12 may be produced by, for example, applying a negative electrode mixture slurry including the negative electrode active material and the binder on the negative electrode core, and drying and subsequently compressing the coating film to form the negative electrode mixture layer on both the surfaces of the negative electrode core. The negative electrode mixture layer may include a conductive agent such as CNT.

The negative electrode active material is not particularly limited as long as the material reversibly occludes and releases lithium ions, and a carbon material such as graphite is generally used. For the negative electrode active material, an element that forms an alloy with Li, such as Si and Sn, a material containing such an element, and the like may be used. Among these, a silicon-containing material containing Si is preferable. As the negative electrode active material, lithium titanate, which has a higher potential of charge and discharge relative to metal lithium than that of the carbon material and the like, may also be used. The negative electrode active materials may be used singly, or in combination thereof.

The carbon material to function as the negative electrode active material is, for example, at least one selected from the group consisting of natural graphite, artificial graphite, soft carbon, and hard carbon. Among these, artificial graphite such as massive artificial graphite (MAG) and graphitized mesophase-carbon microbead (MCMB), natural graphite such as flake graphite, massive graphite, and amorphous graphite, or a mixture thereof are preferably used. Examples of the silicon-containing material to function as the negative electrode active material include a silicon alloy, a silicon compound, and a composite material containing Si. A preferable silicon-containing material is of composite particles including an ion-conductive phase and Si phases dispersed in the ion-conductive phase.

For the binder included in the negative electrode mixture layer, a fluororesin, an olefin resin, PAN, a polyimide, a polyamide, an acrylic resin, and the like may be used as in the case of the positive electrode 11, and polyvinyl acetate, styrene-butadiene rubber (SBR), and the like may be used. Among these, SBR is preferably used. The binders may be used singly, or in combination thereof. The negative electrode mixture layer preferably includes CMC or a salt thereof, polyacrylic acid (PAA) or a salt thereof, polyvinyl alcohol (PVA), or the like. These materials function as a thickener in the negative electrode mixture slurry. A content rate of the binder is not particularly limited, but is, for example, greater than or equal to 0.1 mass% and less than or equal to 5 mass% relative to the mass of the negative electrode mixture layer.

[Separator]

For the separator 13, a porous sheet having an ion permeation property and an insulation property is used. Specific examples of the porous sheet include a microporous thin film, a woven fabric, and a nonwoven fabric. As a material for the separator 13, a polyolefin such as polyethylene or polypropylene, cellulose, or the like is preferable. The separator 13 may have a single-layered structure or a multi-layered structure. On a surface of the separator 13, a highly heat-resistant resin layer such as an aramid resin may be formed.

On a boundary between the separator 13 and at least one of the positive electrode 11 and the negative electrode 12, a filler layer including an inorganic filler may be formed. Examples of the inorganic filler include oxides containing a metal element such as Ti, Al, Si, and Mg, and a phosphoric acid compound. The filler layer may be formed by applying a slurry containing the filler on the surface of the positive electrode 11, the negative electrode 12, or the separator 13.

EXAMPLES

Hereinafter, the present disclosure will be further described with Examples, but the present disclosure is not limited to these Examples.

<Example 1>

[Production of Positive Electrode Active Material]

A hydroxide containing Ni and Mn at a mole ratio of 1:1 and sodium carbonate were mixed at a mole ratio of Ni:Mn:Na = 0.5:0.5:1.05, and the obtained mixture was heated at a temperature rising rate of 1°C/min, calcined in air at 800°C for 24 hours, and then rapidly cooled in air to obtain a Na-containing composite oxide. Lithium nitrate and lithium chloride were mixed at a mole ratio of 88:12 to prepare a Li-containing molten salt. A Li-containing molten salt and a Na-containing composite oxide were mixed at a mole ratio of Li:Na = 30:1, and the obtained mixture was heated at a temperature rising rate of 5°C/min and heated in air at 280°C for 5 hours. Thereafter, the product was cooled at a temperature falling rate of 2°C/min and washed with a sufficient amount of water, followed by heat treatment in a vacuum at 160°C for 4 hours to obtain a Li-Na composite oxide.

The Li-Na composite oxide was subjected to powder X-ray diffraction measurement. In FIG. 2, (a) shows an X-ray diffraction pattern within a $2\theta$ range of greater than or equal to 30° and less than or equal to 40°. The ratio $I_{101}/I_{012}$ of the integrated intensity $I_{101}$ of the diffraction peak of the (101) plane to the integrated intensity $I_{012}$ of the diffraction peak of the (012) plane of the X-ray diffraction pattern was 1.864. The Li-Na composite oxide was subjected to composition analysis using an ICP optical emission spectrometer (CIROS-120, manufactured by SPECTRO). Table 1 shows the composition and integrated intensity ratio $I_{101}/I_{012}$ of the Li-Na composite oxide (positive electrode active material).

[Production of Positive Electrode]

For the positive electrode active material, the Li-Na composite oxide was used. The positive electrode active material, acetylene black, and polyvinylidene fluoride were mixed at a solid mass ratio of 92:5:3, and N-methyl-2-pyrrolidone (NMP) was used as a dispersion medium to prepare a positive electrode mixture slurry. The positive electrode slurry was applied to a positive electrode core composed of an aluminum foil, and the coating film was dried and then rolled by a rolling roller to obtain a positive electrode in which a positive electrode mixture layer was formed on the positive electrode core.

[Preparation of Non-Aqueous Electrolyte Liquid]

Lithium hexafluorophosphate ($LiPF_6$) was dissolved in a mixed solvent of fluoroethylene carbonate (FEC) and methyl propionate (FMP) at a volume ratio of 1:3 so that the concentration was 1 mol/liter to prepare a non-aqueous electrolyte liquid.

[Production of Test Cell]

For the negative electrode, a lithium metal foil was used. The positive electrode and the negative electrode were disposed to face each other with a separator interposed therebetween to form an electrode assembly. The electrode assembly and the non-aqueous electrolyte liquid were housed in a coin-shaped exterior housing can, and an opening portion of the exterior housing can was sealed with a gasket and a sealing assembly to prepare a test cell (non-aqueous electrolyte secondary battery).

<Examples 2 to 6>

A positive electrode active material and a test cell were produced in the same manner as in Example 1 except that, in the synthesis step of the Na-containing composite oxide, the types and added amounts of the additive elements were adjusted so that the composition of the positive electrode active material (Li-Na composite oxide) finally obtained was the composition as shown in Table 1. Then, an integrated intensity ratio $I_{101}/I_{012}$ of X-ray diffraction peaks of the positive electrode active material was determined. In FIG. 2, (b) illustrates an X-ray diffraction pattern measured for the positive electrode active material of Example 2.

<Comparative Example 1>

A hydroxide containing Ni and Mn at a mole ratio of 1:1 and lithium hydroxide were mixed at a mole ratio of Ni: Mn: Li = 0.5:0.5:1.05, and the obtained mixture was heated at a temperature rising rate of 5°C/min, calcined in air at 900°C for 10 hours, and then cooled at a temperature falling rate of 10°C/min to obtain a lithium-transition metal composite oxide. A test cell was produced in the same manner as in Example 1 except that this composite oxide was used for the positive electrode active material. In FIG. 2, (c) illustrates an X-ray diffraction pattern measured for the positive electrode active material of Comparative Example 1. An integrated intensity ratio $I_{101}/I_{012}$ of X-ray diffraction peaks of the positive electrode active material was determined.

<Comparative Example 2>

A positive electrode active material and a test cell were produced in the same manner as in Comparative Example 1 except that the calcining time of the mixture was changed from 10 hours to 100 hours. Then, an integrated intensity ratio $I_{101}/I_{012}$ of X-ray diffraction peaks of the positive electrode active material was determined.

<Comparative Examples 3 to 6>

A positive electrode active material and a test cell were produced in the same manner as in Comparative Example 1 except that the types and added amounts of the additive elements were adjusted so that the composition of the lithium-transition metal composite oxides was as shown in Table 1. Then, an integrated intensity ratio $I_{101}/I_{012}$ of X-ray diffraction peaks of the positive electrode active material was determined.

<Comparative Example 7>

A positive electrode active material and a test cell were produced in the same manner as in Example 1 except that a hydroxide containing Ni and Mn at a mole ratio of 1:1, lithium hydroxide, and sodium carbonate were mixed at a mole ratio of Ni:Mn:Li:Na = 0.5:0.5:1.025:0.025, and the obtained mixture was heated at a temperature rising rate of 5°C/min, calcined in air at 900°C for 10 hours, and then cooled at a temperature falling rate of 10°C/min to obtain a Li-Na-containing transition composite oxide. Then, an integrated intensity ratio $I_{101}/I_{012}$ of X-ray diffraction peaks of the positive electrode active material was determined.

<Comparative Example 8>

A positive electrode active material and a test cell were produced in the same manner as in Comparative Example 7 except that a hydroxide containing Ni and Mn at a mole ratio of 1:1, lithium hydroxide, and sodium carbonate were mixed at a mole ratio of Ni:Mn:Li:Na = 0.5:0.5:0.9:0.15. Then, an integrated intensity ratio $I_{101}/I_{012}$ of X-ray diffraction peaks of the positive electrode active material was determined.

<Comparative Example 9>

A positive electrode active material and a test cell were produced in the same manner as in Example 1 except that lithium nitrate and lithium chloride were mixed at a mole ratio of 88:12 to prepare a Li-containing molten salt, and the Li-containing molten salt and the Li-Na-containing transition composite oxide obtained in Comparative Example 7 were mixed so as to have a mole ratio of 30:1. Then, an integrated intensity ratio $I_{101}/I_{012}$ of X-ray diffraction peaks of the positive electrode active material was determined.

<Comparative Example 10>

A positive electrode active material and a test cell were produced in the same manner as in Example 1 except that lithium nitrate and lithium chloride were mixed at a mole ratio of 88:12 to prepare a Li-containing molten salt, and the Li-containing molten salt and the Li-Na-containing transition composite oxide obtained in Comparative Example 8 were mixed so as to have a mole ratio of 30:1. Then, an integrated intensity ratio $I_{101}/I_{012}$ of X-ray diffraction peaks of the positive electrode active material was determined.

[Evaluation of Discharge Capacity]

Each of the test cells of Examples and Comparative Examples was charged at a constant current of 0.2 C until the battery voltage reached 4.5 V under a condition of 25°C, and then charged at a constant voltage of 4.5 V until the current value reached 0.02 C. The test cells were rested for 20 minutes and then discharged at a constant current of 0.2 C until the battery voltage reached 2.5 V to determine discharge capacities. Table 1 shows the measurement results of the discharge capacity together with the composition of the positive electrode active material and the integrated intensity ratio $I_{101}/I_{012}$ of the X-ray diffraction peaks.

[Table 1]

| | Positive electrode active material | | | | | | | | Discharge capacity mAh/g |
|---|---|---|---|---|---|---|---|---|---|
| | Li | Na | Ni | Mn | Al | Co | Zr | $I_{101}/I_{012}$ | |
| Example 1 | 0.932 | 0.003 | 0.504 | 0.496 | 0 | 0 | 0 | 1.864 | 211.7 |
| Example 2 | 0.936 | 0.012 | 0.499 | 0.492 | 0.009 | 0 | 0 | 1.806 | 222.3 |
| Example 3 | 0.934 | 0.007 | 0.4975 | 0.4975 | 0.005 | 0 | 0 | 2.173 | 217.4 |
| Example 4 | 0.940 | 0.019 | 0.4875 | 0.4875 | 0.025 | 0 | 0 | 1.896 | 213.9 |

(continued)

| | Positive electrode active material | | | | | | | | Discharge capacity mAh/g |
|---|---|---|---|---|---|---|---|---|---|
| | Li | Na | Ni | Mn | Al | Co | Zr | $I_{101}$ / $I_{012}$ | |
| Example 5 | 0.935 | 0.020 | 0.492 | 0.492 | 0 | 0.016 | 0 | 2.147 | 217.4 |
| Example 6 | 0.922 | 0.003 | 0.4975 | 0.4975 | 0 | 0 | 0.005 | 1.934 | 209.5 |
| Comparative Example 1 | 1.02 | 0 | 0.50 | 0.50 | 0 | 0 | 0 | 2.904 | 180.1 |
| Comparative Example 2 | 1.00 | 0 | 0.501 | 0.499 | 0 | 0 | 0 | 2.757 | 160.8 |
| Comparative Example 3 | 1.05 | 0 | 0.4975 | 0.4975 | 0.005 | 0 | 0 | 2.983 | 169.1 |
| Comparative Example 4 | 1.05 | 0 | 0.492 | 0.492 | 0.016 | 0 | 0 | 2.687 | 161.4 |
| Comparative Example 5 | 1.05 | 0 | 0.492 | 0.492 | 0 | 0.016 | 0 | 2.797 | 179.1 |
| Comparative Example 6 | 1.05 | 0 | 0.4845 | 0.4845 | 0 | 0.031 | 0 | 2.919 | 183.5 |
| Comparative Example 7 | 1.025 | 0.025 | 0.50 | 0.50 | 0 | 0 | 0 | 2.751 | 150.7 |
| Comparative Example 8 | 0.90 | 0.15 | 0.50 | 0.50 | 0 | 0 | 0 | 2.256 | 157.9 |
| Comparative Example 9 | 1.025 | 0.025 | 0.50 | 0.50 | 0 | 0 | 0 | 2.248 | 162.6 |
| Comparative Example 10 | 0.90 | 0.15 | 0.50 | 0.50 | 0 | 0 | 0 | 2.777 | 171.6 |

As shown in Table 1, the test cells of Examples all had a higher capacity than the test cells of Comparative Examples. That is, the battery capacity was significantly improved when the positive electrode active material contained a predetermined amount of Na, in which the integrated intensity ratio $I_{101}/I_{012}$ of X-ray diffraction peaks of the positive electrode active material was controlled to be less than 2.2. When the integrated intensity ratio $I_{101}/I_{012}$ was greater than or equal to 2.2 as in the case of the positive electrode active materials of Comparative Examples 1 to 6, the capacity did not increase as in the case of using the positive electrode active materials of Examples. In addition, even if Na was contained as in the positive electrode active materials of Comparative Examples 7 to 10, the discharge capacity decreased when the integrated intensity ratio $I_{101}/I_{012}$ was greater than or equal to 2.2.

It was found that in the positive electrode active materials of Examples, the addition of Al and Co further increased the capacity (see Examples 1 to 5), while in the test cells of Comparative Examples, the addition of Al and Co had little effect or even reduced the capacity. Furthermore, the positive electrode active materials of Examples had an integrated intensity ratio $I_{101}/I_{012}$ of less than 2.2 when calcined for a long time during synthesis, thus greatly contributing to an increase in the capacity of the battery, while the positive electrode active materials of Comparative Examples did not have an integrated intensity ratio $I_{101}/I_{012}$ of less than 2.2 even after long-time calcination. The long-time calcination rather reduced the capacity.

The present disclosure will be further described with the following embodiments.

Constitution 1: A positive electrode active material for a non-aqueous electrolyte secondary battery, the positive electrode active material having a crystal structure belonging to a space group R-3m, and being represented by a compositional formula:

$$Li_\alpha Na_\beta Ni_{1-6-c} Mn_b X_c O_d$$

wherein X represents at least one selected from the group consisting of transition metal elements or main-group elements other than Li, Na, Ni, and Mn; $0.80 < \alpha \leq 1.20$, $0 < \beta \leq 0.20$, $0.80 < \alpha + \beta \leq 1.20$, $0 < 1-b-c \leq 1$, $0 \leq b < 1$, and $0 \leq c < 1$ are satisfied; and d is a value satisfying electroneutrality,

wherein a ratio $I_{101}/I_{012}$ of an integrated intensity $I_{101}$ of a diffraction peak of a (101) plane to an integrated intensity $I_{012}$ of a diffraction peak of a (012) plane of an X-ray diffraction pattern obtained by powder X-ray diffraction is less than 2.2.

Constitution 2: The positive electrode active material according to Constitution 1, wherein in the compositional formula $Li_\alpha Na_\beta Ni_{1-b-c} Mn_b X_c O_d$, a mole ratio ($\beta$) of Na is $0 < \beta \leq 0.20$.

Constitution 3: The positive electrode active material according to Constitution 1 or 2, wherein the ratio $I_{101}/I_{012}$ is greater than or equal to 1.8.

Constitution 4: The positive electrode active material according to any one of Constitutions 1 to 3, wherein in the

compositional formula $Li_\alpha Na_\beta Ni_{1-b-c} Mn_b X_c O_d$, a mole ratio (1-b-c) of Ni is $0.3 \leq 1-b-c \leq 0.9$.

Constitution 5: The positive electrode active material according to any one of Constitutions 1 to 4, wherein in the compositional formula $Li_\alpha Na_\beta Ni_{1-b-c} Mn_b X_c O_d$, a mole ratio (1-b-c) of Ni is $0.40 \leq 1-b-c \leq 0.75$, and a mole ratio (b) of Mn is $0.25 \leq b \leq 0.65$.

Constitution 6: The positive electrode active material according to any one of Constitutions 1 to 5, wherein in the compositional formula $Li_\alpha Na_\beta Ni_{1-b-c} Mn_b X_c O_d$, X represents at least one selected from the group consisting of Mg, Ca, Sr, Ba, Sn, Ti, Si, V, Cr, Fe, Cu, Zn, Bi, Sb, B, Ga, In, P, Zr, Hf, Nb, Ta, Mo, W, Co, and Al.

Constitution 7: The positive electrode active material according to Constitution 6, wherein in the compositional formula $Li_\alpha Na_\beta Ni_{1-b-c} Mn_b X_c O_d$, X represents at least one selected from the group consisting of Al, Co, and Zr.

Constitution 8: A non-aqueous electrolyte secondary battery, comprising: a positive electrode including the positive electrode active material according to any one of Constitutions 1 to 7; a negative electrode; and a non-aqueous electrolyte.

REFERENCE SIGNS LIST

10 Non-aqueous electrolyte secondary battery, 11 Positive electrode, 12 Negative electrode, 13 Separator, 14 Electrode assembly, 16 Exterior housing can, 17 Sealing assembly, 18, 19 Insulating plate, 20 Positive electrode lead, 21 Negative electrode lead, 22 Grooved portion, 23 Internal terminal plate, 24 Lower vent member, 25 Insulating member, 26 Upper vent member, 27 Cap, 28 Gasket

**Claims**

1. A positive electrode active material for a non-aqueous electrolyte secondary battery, the positive electrode active material having a crystal structure belonging to a space group R-3m, and being represented by a compositional formula:

$$Li_\alpha NaNi_{1-b-c} Mn_b X_c O_d$$

wherein X represents at least one selected from the group consisting of transition metal elements and main-group elements other than Li, Na, Ni, and Mn; $0.80 < \alpha \leq 1.20$, $0 < \beta \leq 0.20$, $0.80 < \alpha + \beta \leq 1.20$, $0 < 1-b-c \leq 1$, $0 \leq b < 1$, and $0 \leq c < 1$ are satisfied; and d is a value satisfying electroneutrality, wherein a ratio $I_{101}/I_{012}$ of an integrated intensity $I_{101}$ of a diffraction peak of a (101) plane to an integrated intensity $I_{012}$ of a diffraction peak of a (012) plane of an X-ray diffraction pattern obtained by powder X-ray diffraction is less than 2.2.

2. The positive electrode active material for a non-aqueous electrolyte secondary battery according to claim 1, wherein in the compositional formula $Li_\alpha Na_\beta Ni_{1-b-c} Mn_b X_c O_d$, a mole ratio ($\beta$) of Na is $0 < \beta \leq 0.20$.

3. The positive electrode active material for a non-aqueous electrolyte secondary battery according to claim 2, wherein the ratio $I_{101}/I_{012}$ is greater than or equal to 1.8.

4. The positive electrode active material for a non-aqueous electrolyte secondary battery according to claim 3, wherein in the compositional formula $Li_\alpha Na_\beta Ni_{1-b-c} Mn_b X_c O_d$, a mole ratio (1-b-c) of Ni is $0.3 \leq 1-b-c \leq 0.9$.

5. The positive electrode active material for a non-aqueous electrolyte secondary battery according to claim 4, wherein in the compositional formula $Li_\alpha Na_\beta Ni_{1-b-c} Mn_b X_c O_d$, the mole ratio (1-b-c) of Ni is $0.40 \leq 1-b-c \leq 0.75$, and a mole ratio (b) of Mn is $0.25 \leq b \leq 0.65$.

6. The positive electrode active material for a non-aqueous electrolyte secondary battery according to claim 4, wherein in the compositional formula $Li_\alpha Na_\beta Ni_{1-b-c} Mn_b X_c O_d$, X represents at least one selected from the group consisting of Mg, Ca, Sr, Ba, Sn, Ti, Si, V, Cr, Fe, Cu, Zn, Bi, Sb, B, Ga, In, P, Zr, Hf, Nb, Ta, Mo, W, Co, and Al.

7. The positive electrode active material for a non-aqueous electrolyte secondary battery according to claim 6, wherein in the compositional formula $Li_\alpha Na_\beta Ni_{1-b-c} Mn_b X_c O_d$, X represents at least one selected from the group consisting of Al, Co, and Zr.

8. A non-aqueous electrolyte secondary battery, comprising:

   a positive electrode including the positive electrode active material according to any one of claims 1 to 7;
   a negative electrode; and
   a non-aqueous electrolyte.

# Figure 1

Figure 2

## INTERNATIONAL SEARCH REPORT

| | International application No. |
|---|---|
| | **PCT/JP2024/002019** |

| | |
|---|---|
| **A.** | **CLASSIFICATION OF SUBJECT MATTER** |

*H01M 4/525*(2010.01)i; *C01G 53/00*(2006.01)i; *H01M 4/505*(2010.01)i
FI:  H01M4/525; H01M4/505; C01G53/00 A

According to International Patent Classification (IPC) or to both national classification and IPC

| | |
|---|---|
| **B.** | **FIELDS SEARCHED** |

Minimum documentation searched (classification system followed by classification symbols)

H01M4/00-4/62; C01G53/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| A | JP 2007-257885 A (NISSAN MOTOR CO., LTD.) 04 October 2007 (2007-10-04) paragraphs [0016]-[0023], [0028], [0036]-[0038], [0123]-[0125], [0147]-[0149] | 1-8 |
| A | CN 109119628 A (CENTRAL SOUTH UNIVERSITY) 01 January 2019 (2019-01-01) paragraphs [0035]-[0038] | 1-8 |
| A | JP 2022-520866 A (SM LAB CO., LTD.) 01 April 2022 (2022-04-01) paragraphs [0108]-[0109]-[0118]-[0119], [0121], [0132] | 1-8 |
| A | JP 2013-112531 A (TANAKA CHEMICAL CORP.) 10 June 2013 (2013-06-10) | 1-8 |
| A | WO 2014/103166 A1 (SANYO ELECTRIC CO., LTD.) 03 July 2014 (2014-07-03) | 1-8 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **25 March 2024** | **02 April 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

### INTERNATIONAL SEARCH REPORT
Information on patent family members

International application No.

**PCT/JP2024/002019**

| Patent document cited in search report | | | Publication date (day/month/year) | Patent family member(s) | Publication date (day/month/year) |
|---|---|---|---|---|---|
| JP | 2007-257885 | A | 04 October 2007 | (Family: none) | |
| CN | 109119628 | A | 01 January 2019 | (Family: none) | |
| JP | 2022-520866 | A | 01 April 2022 | US 2022/0102715 A1 paragraphs [0135]-[0136], [0146]-[0150], [0158] US 2022/0190316 A1 WO 2020/175781 A1 WO 2020/175782 A1 EP 3933983 A1 EP 3933984 A1 KR 10-2020-0105390 A KR 10-2020-0105391 A CN 113412548 A CN 113424340 A | |
| JP | 2013-112531 | A | 10 June 2013 | (Family: none) | |
| WO | 2014/103166 | A1 | 03 July 2014 | US 2015/0243982 A1 CN 104603996 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9270260 A
- JP 2000133262 A
- JP 2012084552 A

**Non-patent literature cited in the description**

- **F. IZUMI** ; **K. MOMMA**. *Solid State Phenom*, 2007, vol. 130, 15-20